# EUROPEAN PATENT APPLICATION

(11) **EP 2 385 424 A1**
(43) Date of publication of application: **09.11.2011**
(21) Application number: 10743866.5
(22) Date of filing: 23.02.2010
(51) Int. Cl.: G02F 1/17

(54) **DISPLAY ELEMENT AND ELECTRICAL DEVICE**

(30) Priority: 23.02.2009 JP 2009039563
(71) Applicant: Sharp Kabushiki Kaisha, Osaka-shi, Osaka 545-8522 (JP)
(72) Inventor: KATAYAMA, Takashi, Osaka 545-8522 (JP)
(74) Representative: Müller - Hoffmann & Partner
(86) International application number: PCT/JP2010/052663
(87) International publication number: WO 2010/095743

(57) **Abstract**

A display element (2) comprises a soft material (23) enclosed in a display space (K) formed between an upper substrate (first transparent substrate) (5) and a lower substrate (second transparent substrate) (6) in an expandable and/or contractable manner and a counter electrode (second electrode) (22) and a pixel electrode (first electrode) (21) provided on the upper substrate (5) and the lower substrate (6), respectively. In response to an electric field generated between the pixel electrode (21) and the counter electrode (22), the soft material (23) is expanded and/or contracted to change each contact area between the soft material (23) and the upper substrate (5) and the lower substrates (6) to change a display color on the display surface.

## Description

### Technical Field

The present invention relates to a display element capable of changing a display color by applying a voltage to a soft material such as a liquid crystal elastomer, and to an electrical device using the display element.

### Background Art

In recent years, liquid crystal display devices have been used widely in, for example, liquid crystal display televisions, monitors, mobile phones, and the like as flat panel displays having advantages over conventional cathode-ray tubes such as being thin and lightweight. Such liquid crystal display devices display information such as characters and images by changing, in response to an applied voltage to a liquid crystal layer, the optical anisotropy of the liquid crystal layer to change the light transmittance. Depending on how light utilized in displaying enters the liquid crystal layer, liquid crystal display devices can be mainly divided into three types; transmission type, reflection type, and semi-transmission type.

To be more specific, in a transmission type liquid crystal display device, an illuminating device (backlight device) is disposed on the backside (non-display surface side) of a liquid crystal display element provided with a liquid crystal layer. Light from the illuminating device passes through the liquid crystal display element, whereby information is displayed and the user can visually identify the information. In a reflection type liquid crystal display device, light incident from the front side is reflected upon a liquid crystal display element, whereby information is displayed and the user can visually identify the information.

Further, a semi-transmission type liquid crystal display device is configured to function in the same manner as a transmission type or reflection type liquid crystal display device depending upon the environment in which the device is used. Specifically, in an environment with strong externally incident light, a semi-transmission type liquid crystal display device carries out displaying in the same manner as a reflection type liquid crystal display device by reflecting the external light. In contrast, in an environment with weak externally incident light, a semi-transmission type liquid crystal display device carries out displaying in the same manner as a transmission type liquid crystal display device such that an illuminating device provided on the backside of the liquid crystal display element is turned on and light from the illuminating device is utilized in the displaying. Moreover, some semi-transmission type liquid crystal display devices carry out displaying in the transmission mode and the reflection mode at the same time irrespective of the intensity of externally incident light.

Further, as described in Patent document 1, for example, a conventional liquid crystal display device uses a liquid crystal display element including a liquid crystal layer, a pair of transparent substrates between which the liquid crystal layer is sandwiched, and a pair of polarizing plates arranged so as to sandwich the pair of transparent substrates and such that their transmission axes are in crossed Nicols. The liquid crystal layer modulates the polarization state of light emitted from the illuminating device and incident to the liquid crystal layer through the polarizing plate on the non-display surface side, and controls the amount of the light that passes through the polarizing plate on the display surface side, whereby desired images are displayed by the liquid crystal display element.

### Prior art document

### Patent document

Patent Document 1: JP H8-129173

### Disclosure of Invention

### Problem to be Solved by the Invention

However, conventional liquid crystal display devices such as one described above have the following problems. That is, since the liquid crystal display element used therein is provided with a pair of polarizing plates, the efficiency of light utilized in displaying, in other words, light from the illuminating device and external light is extremely low and it is difficult to improve the light efficiency. Moreover, in conventional liquid crystal display devices, the viewing angle property could lead to degradation in the display quality.

With the foregoing in mind, it is an object of the present invention to provide a display element with excellent display quality capable of improving the efficiency of light utilized in displaying and to provide an electrical device using the display element.

### Means for Solving Problem

To achieve the above object, the display element of the present invention includes: a first transparent substrate provided on a display surface side; a second transparent substrate provided on a non-display surface side of the first transparent substrate such that a predetermined display space is formed between the first transparent substrate and the second transparent substrate; a first electrode and a second electrode provided on at least one of the first transparent substrate and the second transparent substrate; a voltage application portion for applying a voltage to at least one of the first electrode and the second electrode such that an electric field is generated between the first electrode and the second electrode; a soft material enclosed in the display space in an expandable and/or contractable manner, wherein the soft material expands and/or contracts when an electric field is generated between the first electrode and the second electrode such that the soft material comes into contact with or moves away from at least one of the first transparent substrate and the second transparent substrate in response to the generated electric field; and a control portion for receiving an externally input instruction signal and driving the voltage application portion based on the input instruction signal. The control portion causes the soft material to expand and/or contract to change each contact area between the soft material and the first and second transparent substrates to change a display color on the display surface.

In the display element configured as described above, the predetermined display space is formed between the first transparent substrate and the second transparent substrate, and the soft material is enclosed in the display space in an expandable and/or contractable manner. Further, the control portion causes the soft material to expand and/or contract to change each contact area between the soft material and the first and second transparent substrates to change a display color on the display surface. This allows configuring a display element capable of carrying out displaying without the use of a polarizing plate in contrast to the conventional example described above. For this reason, a display element with excellent display quality capable of improving the efficiency of light utilized in displaying can be configured.

Further, the display element of the present invention may be configured such that a plurality of pixel regions are provided on the display surface side in a matrix, and in each of the plurality of pixel regions, the first electrode is provided on one of the first transparent substrate and the second transparent substrate and the second electrode is provided on the other of the first transparent substrate and the second transparent substrate.

In this case, the soft material expands and/or contracts in each of the plurality of pixel regions in response to a vertical electric field generated in the direction perpendicular to the first transparent substrate and the second transparent substrate, whereby a display color on the display surface can be changed for each pixel region.

Further, the display element of the present invention may configured such that a plurality of pixel regions are provided on the display surface side in a matrix, and in each of the plurality of pixel regions, the first electrode and the second electrode are provided on one of the first transparent substrate and the second transparent substrate.

The soft material expands and/or contracts in each of the plurality of pixel regions in response to a horizontal electric field generated in the direction parallel to the first transparent substrate and the second transparent substrate, whereby a display color on the display surface can be changed for each pixel region.

Further, in the display element of the present invention, it is preferable that a plurality of data lines and a plurality of scanning lines are provided on one of the first transparent substrate and the second transparent substrate in a matrix, each of the plurality of pixel regions is located at each of intersections of the data lines and the scanning lines and a switching element connected to the first electrode is provided for each pixel region in the vicinity of the intersection of each data line and each scanning line, and a data line driving circuit that outputs voltage signals to the data lines in response to instruction signals from the control portion is used as the voltage application portion.

In this case, a matrix driving display element with excellent display quality can be configured.

Further, in the display element of the present invention, it is preferable that the soft material is enclosed in the display space so as to be in contact with one of the first transparent substrate and the second transparent substrate.

In this case, the soft material can come into contact with the other of the first transparent substrate and the second transparent substrate with ease when the electric field is generated, whereby a display color on the display surface can be changed with ease.

Further, in the display element of the present invention, it is preferable that when an electric field is not generated between the first electrode and the second electrode the soft material has a polygonal prism shape whose top is protruded toward at least one of the first transparent substrate and the second transparent substrate.

In this case, it is possible to change an increase in each contact area between the soft material and the first and second transparent substrates with ease, so that high-definition gradation can be displayed with ease.

Further, in the display element of the present invention, it is preferable that an insulating fluid unblendable with the soft material is enclosed in the display space movably in the display space.

In this case, it is possible to increase the rate at which the soft material expands and/or contracts with ease, so that the rate at which a display color on the display surface is changed can also be increased with ease.

Further, in the display element of the present invention, a liquid crystal elastomer having positive dielectric anisotropy may be used as the soft material.

In this case, a normally black or normally white display element can be configured.

Further, in the display element of the present invention, a liquid crystal elastomer having negative dielectric anisotropy may be used as the soft material.

In this case, a normally black or normally white display element can be configured.

Further, the electrical device of the present invention includes a display portion for displaying information containing characters and images. Any one of the display elements described above is used as the display portion.

Since the electrical device configured as described above uses, as the display portion, a display element with excellent display quality capable of improving the efficiency of light utilized in displaying, a high-performance electrical device with reduced power consumption can be configured.

### Effects of the Invention

According to the present invention, it is possible to provide a display element with excellent display quality capable of improving the efficiency of light utilized in displaying and to provide an electrical device using the display element.

### Brief description of the drawings

[FIG. 1] FIG. 1 is a cross-sectional view for explaining a display element and a display device according to Embodiment 1 of the present invention.
[FIG. 2] FIG. 2 is a plan view for explaining a schematic configuration of the display element.
[FIG. 3] FIG. 3A is a cross-sectional view showing a configuration of principal portions of the display element and FIG. 3B is a perspective view of the soft material shown in FIG. 3A.
[FIG. 4] FIGS. 4A to 4C are cross-sectional views for explaining exemplary operation of the display element and show the configuration of the principal components of the display element in the voltage-off state, the intermediate voltage application state, and the voltage on state, respectively.
[FIG. 5] FIGS. 5A and 5B are drawings for explaining specific macroscopic expansion/contraction behavior of the soft material in the voltage off state and the voltage-on state, respectively.
[FIG. 6] FIGS. 6A and 6B are drawings for explaining specific microscopic expansion/contraction behavior of the soft material in the voltage off state and the voltage-on state, respectively.
[FIG. 7] FIG. 7 is a plan view for explaining a schematic configuration of a display element according to Embodiment 2.
[FIG. 8] FIG. 8 is a cross-sectional view showing a configuration of principal components of the display element shown in FIG. 7.
[FIG. 9] FIGS. 9A to 9C are cross-sectional views for explaining exemplary operation of the display element shown in FIG. 7 and show the configuration of the principal components of the display element shown in FIG. 7 in the voltage-off state, the intermediate voltage application state, and the voltage-on state, respectively.
[FIG. 10] FIG. 10A is a cross-sectional view showing a configuration of principal components of a display element according to Embodiment 3 of the present invention and FIG. 10B is a perspective view showing the soft material shown in FIG. 10A.
[FIG. 11] FIGS. 11A to 11C are cross-sectional views for explaining exemplary operation of the display element shown in FIG. 10 and show the configuration of the principal components of the display element shown in FIG. 10 in the voltage-off state, the intermediate voltage application state, and the voltage-on state, respectively.
[FIG. 12] FIGS. 12A and 12B are perspective views of the soft material shown in FIG. 10 in the voltage-off state and the voltage-on state, respectively, and FIG. 12C is a graph showing changes in the transmittance of the soft material shown in FIG. 10.
[FIG. 13] FIGS. 13A and 13B are drawings for explaining specific macroscopic expansion/contraction behavior of other soft material in the voltage-off state and the voltage-on state, respectively.
[FIG. 14] FIGS. 14A and 14B are a cross-sectional view and a plan view showing other soft material, respectively, FIGS. 14C and 14D are a cross-sectional view and a plan view showing other soft material, respectively, and FIGS. 14E and 14F are a cross-sectional view and a plan view showing other soft material, respectively.
[FIG. 15] FIGS. 15A and 15B are a cross-sectional view and a plan view showing other soft material, respectively, FIGS. 15C and 15D are a cross-sectional view and a plan view showing other soft material, respectively, and FIGS. 15E and 15F are a cross-sectional view and a plan view showing other soft material, respectively.

### Description of the Invention

Hereinafter, preferred embodiments of the display element and the electrical device of the present invention will be described with reference to the drawings. In the following description, the present invention is applied to a transmission type display device as an example. The size and size ratio of each of the constituent members in each drawing do not exactly reflect those of the actual constituent members.

### [Embodiment 1]

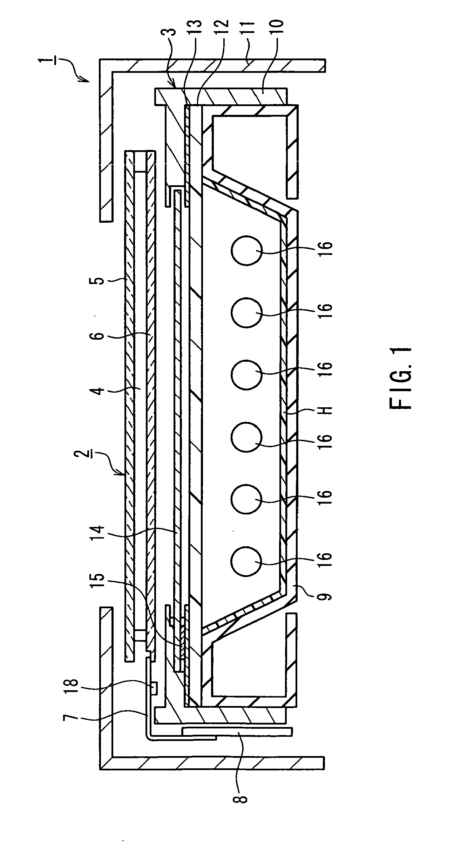

FIG. 1 is a cross-sectional view for explaining a display element and a display device according to Embodiment 1 of the present invention. In the drawing, a display device 1 according to the present embodiment includes a display element 2 of the present invention and an illuminating device 3; the display element 2 as the display portion is placed such that the upper side of the drawing is the viewer side (display surface side) and the illuminating device 3 is disposed on the non-display surface side (lower side of the drawing) of the display element 2 and produces illumination light for illuminating the display element 2. As will be described later in detail, the display element 2 is a rectangular display panel provided with a plurality of pixel regions in a matrix on the display surface side. The display element 2 is configured such that a display color on the display surface side can be changed to white or black in each pixel region by allowing illumination light from the illuminating device 3 to pass therethrough or blocking the illumination light.

Further, the display element 2 includes a soft material layer 4 containing a soft material (described later) and a upper substrate 5 and a lower substrate 6 that sandwich the soft material layer 4. For example, transparent glass substrates are used for the upper substrate 5 and the lower substrate 6, and the upper substrate 5 and the lower substrate 6 are used as a first transparent substrate and a second transparent substrate, respectively. Further, the display element 2 includes a flexible printed circuit board 7 and a printed circuit board 8 connected to the flexible printed circuit board 7. A source driver 18 as a driver for driving the soft material layer 4 pixel by pixel is mounted on the flexible printed circuit board 7. Further, to the printed circuit board 8, a panel control portion (described later) is connected electrically, and the panel control portion drives the source driver 18.

The illuminating device 3 includes a chassis 9 that has a bottom and is open to the upper side of the drawing (i.e., the display element 2 side), and a frame 10 that is provided on the chassis 9 near the display element 2. The chassis 9 and the frame 10 are made of metal or a synthetic resin, and they are supported by a bezel 11 having an L-shaped cross section with the display element 2 being located on the upper side of the frame 10. Specifically, the chassis 9 is the enclosure of the illuminating device 3 and accommodates cold cathode fluorescent tubes (described later) as light sources. The bezel 11 is for accommodating the display element 2. The bezel 11 is attached to the chassis 9 and the frame 10 with the display element 2 being sandwiched between the bezel 11 and the frame 10. The illuminating device 3 is attached to the display element 2, and they are integrated into a transmission type display device 1 in which illumination light from the illuminating device 3 is incident to the display element 2.

The illuminating device 3 further includes a diffusing plate 12 that covers the opening of the chassis 9, an optical sheet 14 that is located above the diffusing plate 12 to face the display element 2, and a reflecting sheet H that is provided on the inner surface of the chassis 9. The illuminating device 3 also includes a plurality of, for example, six cold cathode fluorescent tubes 16 that are provided in the chassis 9 under the display element 2. Thus, the direct type illuminating device 3 is configured. The illuminating device 3 is configured such that light is emitted from each cold cathode fluorescent tube 16 as illumination light through the light emitting surface of the illuminating device 3 opposing the display element 2.

Although the description given above is directed to the configuration in which the direct type illuminating device 3 is used, the present embodiment is not limited to this configuration. Instead, an edge-light type illuminating device having a light guiding plate may be used. Further, it is also possible to use an illuminating device having light sources other than cold cathode fluorescent tubes, such as hot cathode fluorescent tubes and LEDs.

A rectangular synthetic resin or glass material having a thickness of, for example, about 2 mm is used for the diffusing plate 12. The diffusing plate 12 diffuses light from the cold cathode fluorescent tubes 16 and emits the diffused light toward the optical sheet 14. The four sides of the diffusing plate 12 are placed on the frame-shaped upper surface of the chassis 9. The diffusing plate 12 is incorporated into the illuminating device 3 such that the diffusing plate 12 is sandwiched between the surface of the chassis 9 and the inner surface of the flame 10 via elastically deformable pressing members 13. Moreover, the central portion of the diffusing plate 12 is supported by a transparent supporting member (not shown) provided in the chassis 9, whereby the diffusing plate 12 is prevented from bending inwardly

The diffusing plate 12 is held movably between the chassis 9 and the pressing members 13. Even if the diffusing plate 12 expands and/or contracts (i.e., plastic deformation) due to the influence of heat, such as heat produced by the cold cathode fluorescent tubes 16 and a rise in temperature inside the chassis 9, the pressing members 13 deform elastically to absorb the plastic deformation, minimizing a drop in diffusibility of light from the cold cathode fluorescent tubes 16.

The optical sheet 14 includes a condenser sheet made of, for example, a synthetic resin film having a thickness of about 0.5 mm and is configured to increase the brightness of the illumination light to the display element 2. Known optical sheet materials such as a prism sheet may be laminated on top of the optical sheet 14 as needed to improve the display quality of the display element 2 on the display surface. The optical sheet 14 is configured to convert the light emitted from the diffusing plate 12 into planar light having uniform brightness not less than a predetermined value (e.g., 10000 cd/m²) and to allow the planar light to enter the display element 2 as illumination light.

The optical sheet 14 has protrusions that protrude toward the left side of FIG. 1 at the center of the left end side in FIG. 1, which is to be the upper side in the actual use of the display device 1. Of the optical sheet 14, only the protrusions are sandwiched between the inner surface of the frame 10 and the pressing members 13 via an elastic material 15. Thus, the optical sheet 14 is incorporated into the illuminating device 3 in an expandable and/or contractable manner. For this reason, even if the optical sheet 14 expands and/or contracts (i.e., plastic deformation) due to the influence of heat such as heat produced by the cold cathode fluorescent tubes 16, the optical sheet 14 can expand and/or contract freely relative to the protrusions, minimizing the chance of the optical sheet 14 becoming wrinkled or bent. As a result, the display device 1 can minimize degradation in the display quality of the display element 2 on the display surface, such as unevenness in brightness, caused by the optical sheet 14 being bent, etc.

Each cold cathode fluorescent tube 16 is of a straight-tube type, and electrode portions (not shown) provided at the both ends are supported outside the chassis 9. Further, each cold cathode fluorescent tube 16 is configured to have a small diameter of about 3.0 to 4.0 mm so as to have excellent light-emission efficiency. Each cold cathode fluorescent tube 16 is held by a light source holder (not shown) within the chassis 9 such that each cold cathode fluorescent tube 16 is kept away from the diffusing plate 12 and the reflecting sheet H at a predetermined distance.

For example, a film having a thickness of about 0.2 to 0.5 mm and made of metal having a high optical reflectance such as aluminum or silver is used for the reflecting sheet H. The reflecting sheet H functions as a reflecting plate that reflects light from the cold cathode fluorescent tubes 16 toward the diffusing plate 12. For this reason, in the illuminating device 3, emitted light from the cold cathode fluorescent tubes 16 can be reflected toward the diffusing plate 12 in an efficient manner, whereby the efficiency of the light and the brightness of the light at the diffusing plate 12 can be improved. In addition to the description given above, a synthetic resin reflecting sheet may be used in place of the metal thin film or a paint such a white paint having a high optical reflectance may be applied to the inner surface of the chassis 9 to let the inner surface function as a reflecting plate, for example.

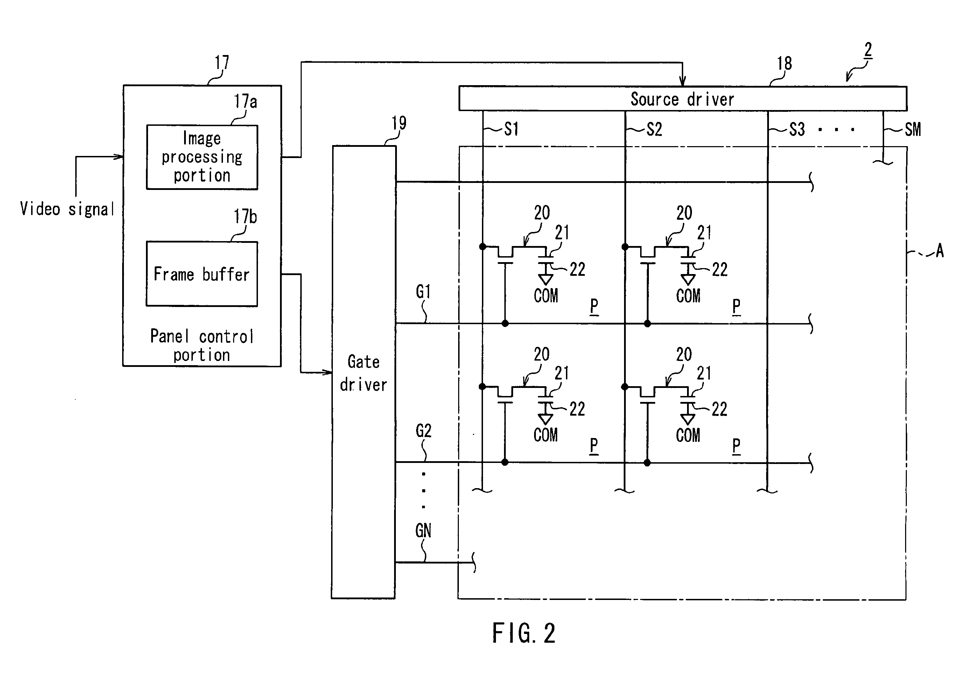

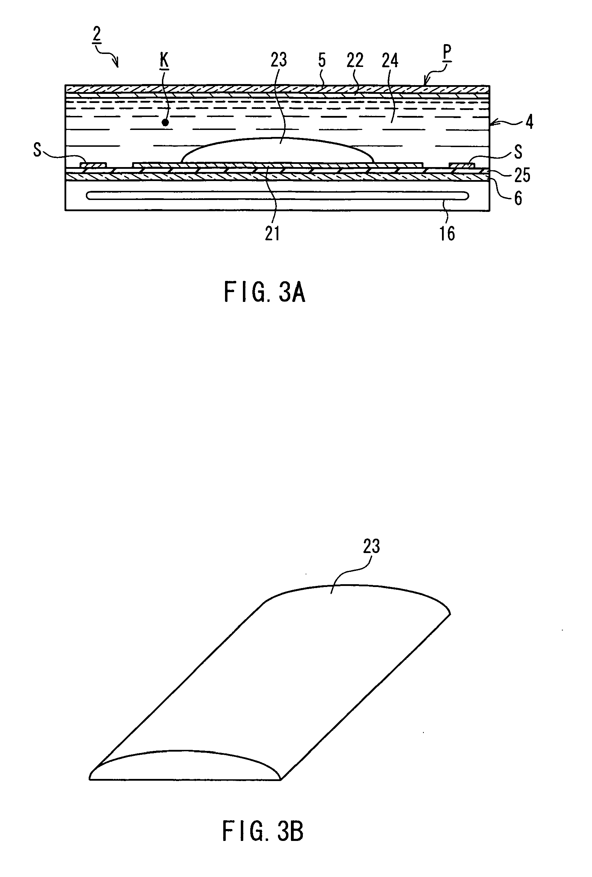

Next, the display element 2 according to the present embodiment will be described specifically also with reference to FIGS. 2 and 3.

FIG. 2 is a plan view for explaining a schematic configuration of the display element. FIG. 3A is a cross-sectional view showing a configuration of principal components of the display element, and FIG. 3B is a perspective view showing the soft material shown in FIG. 3A.

First, an overall configuration of the display element 2 according to the present embodiment will be described specifically with reference to FIG. 2.

In FIG. 2, a panel control portion 17 is a control portion that receives an externally input instruction signal and drives the source driver 18 as a voltage application portion based on the input instruction signal. In other words, a video signal (instruction signal) is input to the panel control portion 17 from outside the display device 1. Further, the panel control portion 17 includes an image processing portion 17a for subjecting the input video signal to predetermined image processing to generate instruction signals to the source driver 18 and to a gate driver 19, respectively, and a frame buffer 17b capable of storing one frame of display data contained in the input video signal. The panel control portion 17 drives the source driver 18 and the gate driver 19 in response to the input video signal, whereby information according to the video signal is displayed on the display element 2.

As described above, the source driver 18 is mounted on the flexible printed circuit board 7 and is a voltage application portion that applies a voltage to pixel electrodes (first electrode) described later. Similarly, the gate driver 19 is mounted on a flexible printed circuit board (not shown). The source driver 18 and the gate driver 19 are driving circuits that drive a plurality of pixel regions P provided within an effective display area (display surface) A of the display element 2 pixel by pixel. A plurality of source lines S1 to SM (M is an integer equal to or greater than 2; hereinafter, collectively referred to as "S") are connected to the source driver 18 and a plurality of gate lines G1 to GN (N is an integer equal to or greater than 2; hereinafter, collectively referred to as "G") are connected to the gate driver 19.

The source lines S and the gate lines G are data lines and scanning lines, respectively. The source lines S and the gate lines G are arranged in a matrix at least within the effective display area A, and each of the plurality of pixel regions P is formed in each of the areas divided in a matrix. In other words, each of the plurality of pixel regions P is located at each of the intersections of the source lines S and the gate lines G in the display element 2. A thin film transistor (TFT) 20 as a switching element is provided for each pixel region P in the vicinity of the intersection of each source line S and each gate line G in the display element 2.

Specifically, to each gate line G, the gate of the corresponding thin film transistor 20 is connected. On the other hand, to each source line S, the source of the corresponding thin film transistor 20 is connected. To the drain of each thin film transistor 20, the pixel electrode 21 as the first electrode provided for each pixel is connected. Further, in each pixel, a counter electrode 22 as a second electrode is configured to oppose the pixel electrode 21via the soft material layer 4 (described later in detail). On the basis of an instruction signal from the image processing portion 17a, the gate driver 19 successively outputs to the gate lines G gate signals for turning on the gate of the corresponding thin film transistors 20. On the other hand, the source driver 18 is configured to functions as a data line driving circuit that outputs voltage signals to the source lines S in response to an instruction signal from the panel control portion 17. In other words, the source driver 18 outputs, based on an instruction signal from the image processing portion 17a, voltage signals (gradation voltage) according to the brightness (gradation) of a display image to the corresponding source lines S.

Although the description give above is directed to the case of using the thin film transistors 20 as switching elements, switching elements that can be used in the present invention are not limited to thin film transistors. For example, other three-terminal switching elements such as a field effect transistor or two-terminal switching elements such as a thin film diode can also be used.

Next, a specific configuration of the pixel region P of the display element 2 according to the present embodiment will be described with reference to FIG. 3.

As shown in FIG. 3A, a predetermined display space K is formed between the upper substrate (first transparent substrate) 5 and the lower substrate (second transparent substrate) 6 provided on the display surface side and the non-display surface side of the display element 2, respectively A soft material 23 and black ink 24 contained in the soft material layer 4 are enclosed in the display space K That is, in the display element 2, each of the plurality of pixel regions P is defined by an area partitioned by two adjacent source lines S and two adjacent gate lines G, and the soft material 23 is enclosed in the display area K in an expandable and/or contractable manner in each of the plurality of pixel regions P.

Further, as shown in FIG. 3A, the counter electrode (second electrode) 22 is provided on the surface of the upper substrate 5 facing the display space K On the other hand, a transparent insulating film 25 and the pixel electrode (first electrode) 21 are provided in order on the surface of the lower substrate 6 facing the display space K Transparent electrodes such as an ITO film are used for the pixel electrode 21 and the counter electrode 22. Further, the pixel electrode 21 is connected to, for example, the source line S on the left side of FIG. 3A via the thin film transistor 20. A voltage is applied to the pixel electrode 21 from the source driver 18 to generate an electric field (vertical electric field) between the pixel electrode 21 and the counter electrode 22 in a vertical direction (the direction perpendicular to the upper substrate 5 and the lower substrate 6).

A colorless and transparent liquid crystal elastomer of positive type is used for the soft material 23. In response to the generated electric field between the pixel electrode 21 and the counter electrode 22, the soft material 23 expands and/or contracts in the thickness direction (i.e., the direction perpendicular to the upper substrate 5 and the lower substrate 6) from the state shown in FIG. 3A (described later in detail). As shown in FIG. 3B, the soft material 23 has a semi-elliptic cylinder shape when the electric field is not generated and is enclosed in the display space K so as to be in contact with the pixel electrode 21 on the lower substrate 6.

Further, nonpolar (nonconductive) oil composed of one or more components selected from, for example, side-chain higher alcohols, side-chain higher fatty acids, alkane hydrocarbons, silicone oils, and matching oils are used for the black ink 24. The black ink 24 is colored black with the addition of a black pigment or colorant. Further, the black ink 24 moves within the display space K as the soft material 23 expands and/or contracts (elastic deformation). As shown in FIG. 3A, in the display element 2 according to the present embodiment, the soft material 23 is covered with the black ink 24 when viewed from the display surface side (the upper substrate 5 side) when an electric filed is not generated between the pixel electrode 21 and the counter electrode 22. That is, the display element 2 according to the present embodiment is a so-called normally black display element that displays black in the voltage-off state.

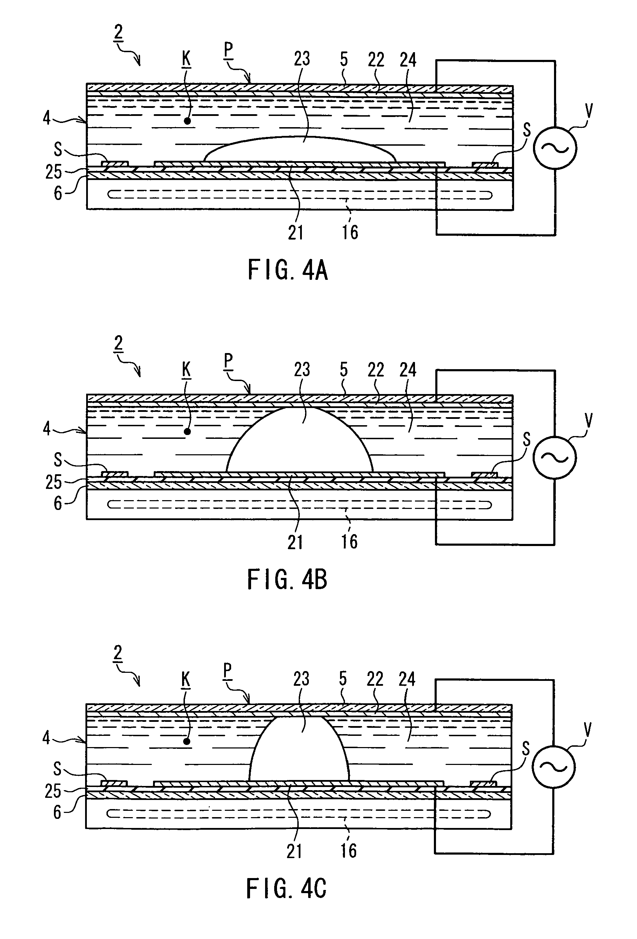

Now, the operation of the display element 2 according to the present embodiment will be described specifically also with reference to FIGS. 4 to 6.

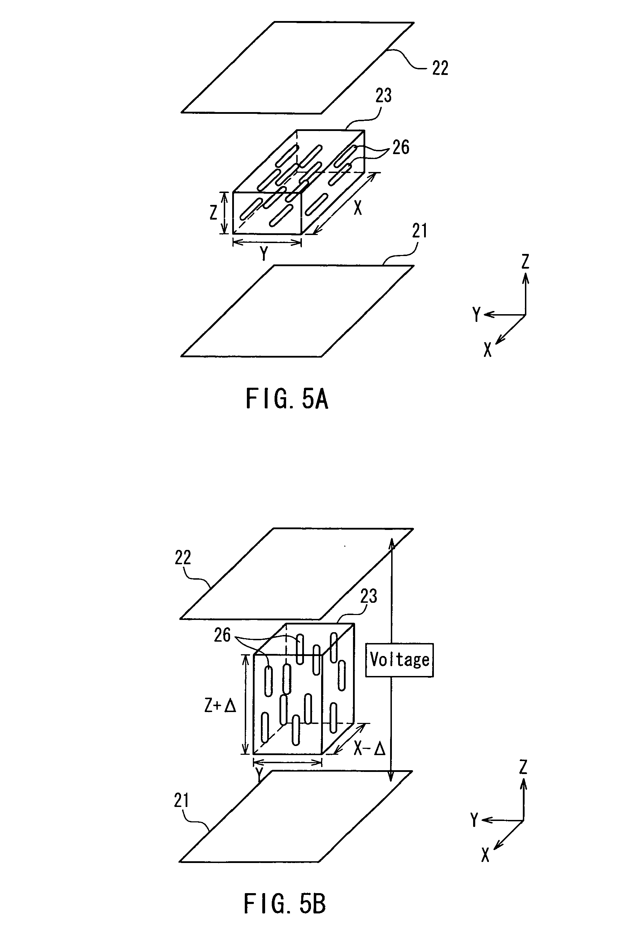

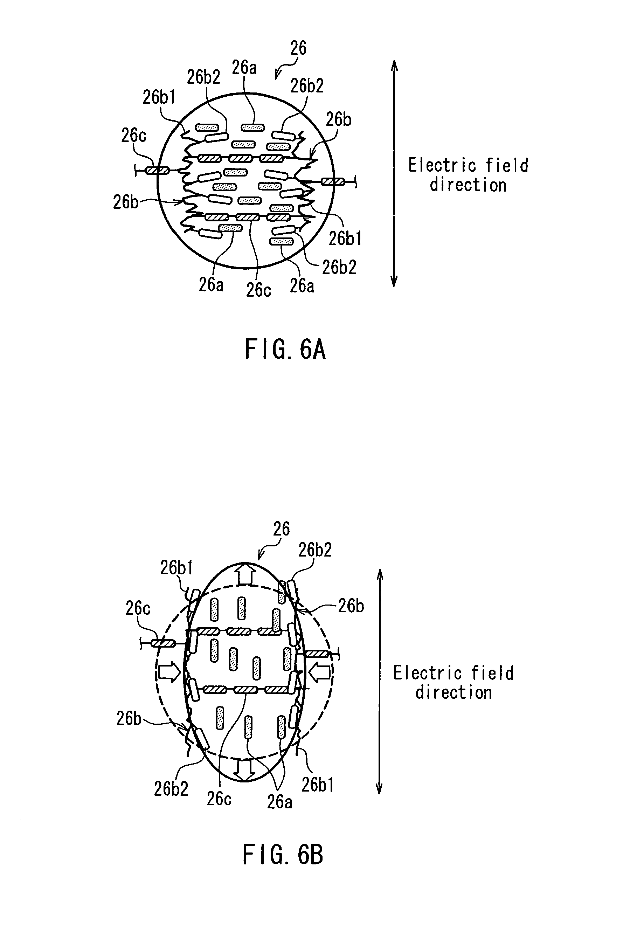

FIGS. 4A to 4C are cross-sectional views for explaining exemplary operation of the display element, and show the configuration of the principal components of the display element in the voltage-off state, the intermediate voltage application state, and the voltage-on state, respectively. FIGS. 5A and 5B are drawings for explaining specific macroscopic expansion/contraction behavior of the soft material in the voltage-off state and the voltage-on state, respectively. FIGS. 6A and 6B are drawings for explaining specific microscopic expansion/contraction behavior of the soft material in the voltage-off state and the voltage-on state, respectively.

First, specific exemplary operation in the pixel region P of the display element 2 according to the present embodiment will be described with reference to FIG. 4.

As shown in FIG. 4A, in the display element 2 according to the present embodiment, the soft material 23 does not expand or contract from the state as initially enclosed in the display space K and is retained in the initial shape in the voltage-off state, that is, when a voltage is not applied to the pixel electrode 21 from a power source V provided within the source driver 18 and substantially functioning as the voltage application portion. Consequently, as shown in FIG. 4A, in the display element 2 according to the present embodiment, the soft material 23 is covered with the black ink 24 when viewed from the display surface side (the upper substrate 5 side), so that the black ink 24 blocks illumination light from the cold cathode fluorescent tubes 16 and black is displayed on the display surface.

Further, as shown in FIG. 4B, when the power source V applies to the pixel electrode 21 an intermediate (gradation) voltage responsive to the gradation of a video signal, an electric field is generated between the pixel electrode 21 and the counter electrode 22 in response to the applied voltage. Consequently, as shown in FIG. 4B, the soft material 23 expands and/or contracts in the thickness direction in response to the generated electric field so as to come into contact with the upper substrate 5, and the tip portion of the soft material 23 comes into contact with the pixel electrode 21 on the upper substrate 5. As a result, in the display element 2 according to the present embodiment, illumination light from the cold cathode fluorescent tubes 16 passes through the lower substrate 6, the insulating film 25, the pixel electrode 21, the soft material 23, the counter electrode 22 and the upper electrode 5 in order and is output externally At this time, in the display element 2 according to the present embodiment, the contact area between the soft material 23 and the upper substrate 5 is smaller than the contact area between the two at the time of applying the maximum voltage (described later). Thus, an intermediate color between black and white and responsive to the applied voltage, in other words, gray is displayed on the display surface.

Further, when the power source V applies to the pixel electrode 21 the maximum voltage responsive to the gradation of a video signal as shown in FIG. 4C, an electric field is generated between the pixel electrode 21 and the counter electrode 22 in response to the maximum applied voltage. Consequently, as shown in FIG. 4C, the soft material 23 expands and/or contracts in the greatest possible manner in the thickness direction in response to the generated electric field so as to come into contact with the upper substrate 5, and the tip portion of the soft material 23 comes into contact with the pixel electrode 21 on the upper substrate 5 in the greatest possible manner. As a result, in the display element 2 according to the present embodiment, illumination light from the cold cathode fluorescent tubes 16 passes through the lower substrate 6, the insulating film 25, the pixel electrode 21, the soft material 23, the counter electrode 22, and the upper electrode 5 in order and is output externally At this time, in the display element 2 according to the present embodiment, the contact area between the soft material 23 and the upper substrate 5 becomes the largest, so that pure white is displayed on the display surface. The maximum voltage applied to the pixel electrode 21 from the power source V is specifically an alternating voltage of few V to a few tens of V.

Although the description given above is directed to the case where an alternating voltage is applied to the pixel electrode 21 from the power supply V provided in the source driver 18, the display element 2 according to the present embodiment is not limited to such a case as long as an electric field can be generated between the pixel electrode (first electrode) 21 and the counter electrode (second electrode) 22. Thus, the display element 2 may be configured such that a voltage is applied to both the pixel electrode 21 and the counter electrode 22 as needed.

Next, specific macroscopic and microscopic expansion/contraction behavior of the soft material 23 will be described specifically also with reference to FIGS. 5 and 6.

In FIGS. 5A and 5B, the display element 2 according to the present embodiment is configured such that the pixel electrode (first electrode) 21 and the counter electrode (second electrode) 22 oppose each other to allow generation of a vertical electric field (an electric field parallel to the Z direction in the drawings). And in the display element 2 according to the present embodiment, the soft material 23 using a positive-type liquid crystal elastomer 26 is enclosed between the pixel electrode 21 and the counter electrode 22.

Specifically, in the voltage-off state of FIG. 5A, the liquid crystal elastomer 26 as the soft material 23 is oriented horizontally by, for example, rubbing or photo-orientation through, for example, a horizontally oriented film (not shown) so as to be parallel to the X direction. Then, when a voltage is applied as in FIG. 5B, the liquid crystal elastomer 26 as the soft material 23 expands in the Z direction as the electric field direction. That is, as shown in FIG. 5B, the soft material 23 expands and/or contracts such that its dimension in the Z direction increases by Δ and its dimension in the X direction decreases by Δ relative to the dimensions of the soft material 23 in the voltage-off state. Further, the volume of the liquid crystal elastomer 26 does not change between the voltage-off state and the voltage-on state. Moreover, the liquid crystal elastomer 26 does not deform in the Y direction because the Y direction does not involve in the reorientation caused by the electric field.

To be more specific, as shown in FIGS. 6A and 6B, the liquid crystal elastomer 26 includes a low molecular liquid crystal 26a (dotted in the drawing), photopolymerized liquid crystal monomers 26b each having a liquid crystal main chain 26b1 and liquid crystal side chains 26b2, and a crosslinker 26c (hatched in the drawing) for connecting the photopolymerized liquid crystal monomers 26b to each other. The liquid crystal elastomer 26 is formed by swelling the photopolymerized liquid crystal monomers 26b with the low molecular liquid crystal 26a. Specific examples of the material of the low molecular liquid crystal 26a include 60CB (4'-(pentyloxy)-4-biphenylcarbonitrile) and 5CB (4'-pentyl-4-biphenylcarbonitrile). Specific examples of the material of the photopolymerized liquid crystal monomers 26b include 6-4-(4-Cyanophenyl) phenoxyl methacrylate. Furthermore, specific examples of the material of the crosslinker 26c include 1,6-hexanediol diacrylate.

In the voltage-off state of FIG. 6A, the low molecular liquid crystal 26a and the liquid crystal side chains 26b2 in the liquid crystal elastomer 26 are oriented to be parallel to the X direction (the orientation direction). On the other hand, in the voltage-on state of FIG. 6B, the low molecular liquid crystal 26a and the liquid crystal side chains 26b2 in the liquid crystal elastomer 26 are reoriented in the electric field direction and the liquid crystal main chain 26b1 expands and/or contracts along the electric field direction. As a result, the liquid crystal elastomer 26 expands in the Z direction (electric field direction) as shown in FIG. 5B in the voltage-on state and the soft material 23 comes into contact with the upper substrate 5.

In the display element 2 according to the present embodiment configured as described above, the predetermined display space K is formed between the upper substrate (first transparent substrate) 5 and the lower substrate (second transparent substrate) 6 and the soft material 23 is enclosed in the display space K in an expandable and/or contractable manner. Further, in the display element 2 according to the present embodiment, the panel control portion 17 causes the soft material 23 to expand and/or contract in response to an external video signal to increase the contact area between the soft material 23 and the upper substrate 5, whereby a display color on the display surface is changed from black to white. Consequently, in contrast to the conventional example described above, the display element 2 capable of carrying out displaying without the use of a polarizing plate can be configured in the present embodiment. Thus, the display element 2 with excellent display quality capable of improving the efficiency of light utilized in displaying can be configured in the present embodiment.

Further, in the display element 2 according to the present embodiment, the plurality of pixel regions P are provided on the display surface side in a matrix, and in each of the plurality of pixel regions P, the pixel electrode (the first electrode) 21 and the counter electrode (second electrode) 22 are provided on the lower substrate 6 and the upper substrate 5, respectively. For this reason, in the display element 2 according to the present embodiment, the soft material 23 expands and/or contracts in response to the vertical electric field in each of the plurality of pixel regions P, so that a display color on the display surface can be changed for each pixel region P.

Further, in the display element 2 according to the present embodiment, the plurality of source lines (data lines) S and the plurality of gate lines (scanning lines) G are provided on the lower substrate 6 in a matrix. Further, each of the plurality of pixel regions P is located at each of the intersections of the source lines S and the gate lines G and the thin film transistor (switching element) 20 connected to the pixel electrode 21 is provided for each pixel region P in the vicinity of the intersection of each source line S and each gate line G. Furthermore, the source driver (data line driving circuit) 18 that outputs voltage signals to the source lines S in response to an instruction signal from the panel control portion 17 is used as the voltage application portion. Consequently, the matrix driving display element 2 with excellent display quality can be configured in the present embodiment.

Because the display device 1 according to the present embodiment uses as the display portion the display element 2 with excellent display quality capable of improving the efficiency of light utilized in displaying, it is possible to configure the high-performance display device (electrical device) 1 with reduced power consumption.

### [Embodiment 2]

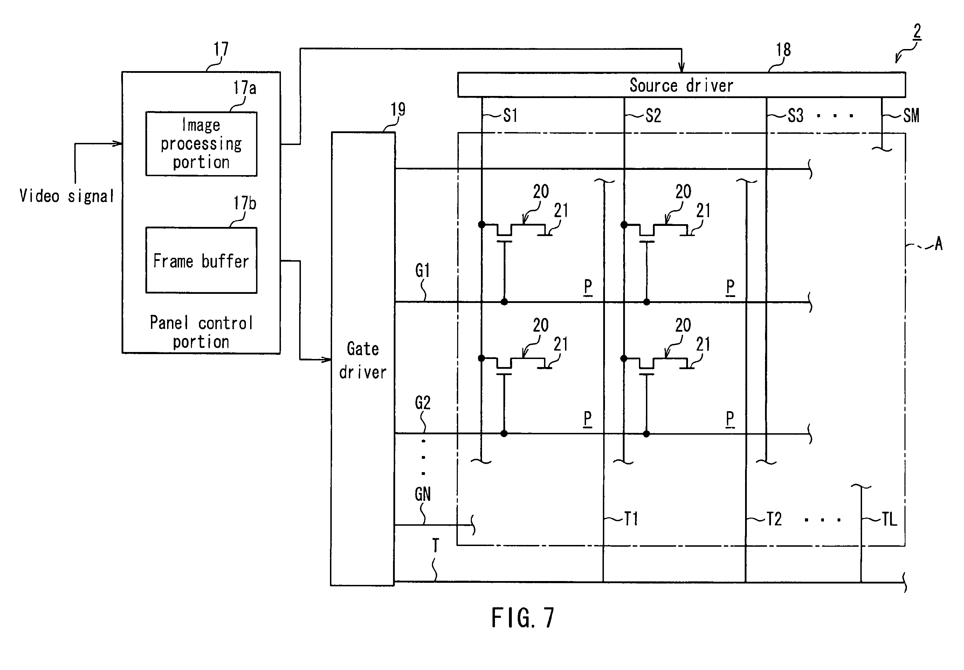

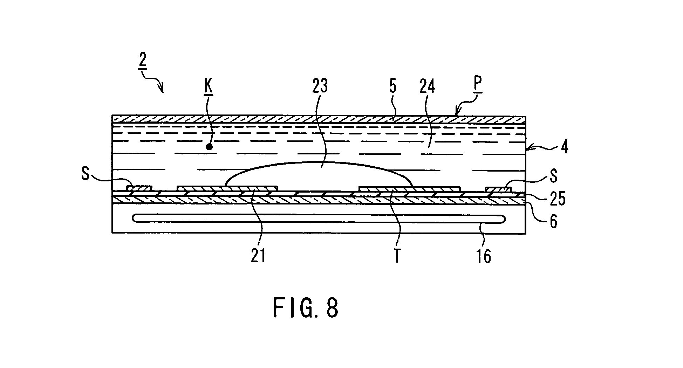

FIG. 7 is a plan view for explaining a schematic configuration of a display element according to Embodiment 2 of the present invention, and FIG. 8 is a cross-sectional view showing a configuration of principal components of the display element shown in FIG. 7. In the drawings, the major difference between the present embodiment and Embodiment 1 is that common electrodes are provided on the lower substrate as the second electrodes in place of the counter electrode to generate a horizontal electric field between each pixel electrode and each common electrode. Note that the same components as in Embodiment 1 are denoted by the same reference numerals and the detailed description thereof will not be repeated.

As shown in FIG. 7, the display element 2 according to the present embodiment is provided with a plurality of common electrodes T1 to TL (L is an integer equal to or greater than 2; hereinafter, collectively referred to as "T"). Each of the common electrodes T is connected to the gate driver 19 and is provided in each pixel region P so as to be parallel to the source lines S.

Further, the common electrodes T are the second electrodes and each of the common electrodes T is formed on the insulating film 25 in each pixel region P so as to be parallel to the pixel electrode 21, as shown in FIG. 8. The display element 2 according to the present embodiment is configured such that when a voltage responsive to a video signal is applied to the pixel electrode 21 from the source driver 18, an electric field (horizontal electric field) is generated between the pixel electrode 21 and the common electrode T in the horizontal direction (the direction parallel to the upper substrate 5 and the lower substrate 6).

Further, in the display element 2 according to the present embodiment, the soft material 23 has a semi-elliptic cylinder shape as shown in FIG. 8 when the horizontal electric field is not generated, and is enclosed in the display space K so as to be in contact with the pixel electrode 21, the common electrode T, and the insulating film 25 on the lower substrate 6.

Moreover, in the display element 2 according to the present embodiment, a colorless and transparent liquid crystal elastomer of negative type is used for the soft material 23 so as to expand and/or contract in response to the horizontal electric field. When a horizontal electric field is not generated, the negative-type liquid crystal elastomer as the soft material 23 is oriented horizontally by, for example, rubbing or photo-orientation through, for example, a horizontally orientated film (not shown) so as to be parallel to the horizontal direction. Similarly to the positive-type liquid crystal elastomer, the negative-type liquid crystal elastomer also includes a low molecular liquid crystal, photopolymerized liquid crystal monomers each having a liquid crystal main chain and liquid crystal side chains, and a crosslinker for connecting the photopolymerized liquid crystal monomers. The liquid crystal elastomer is formed by swelling the photopolymerized liquid crystal monomers with the low molecular liquid crystal.

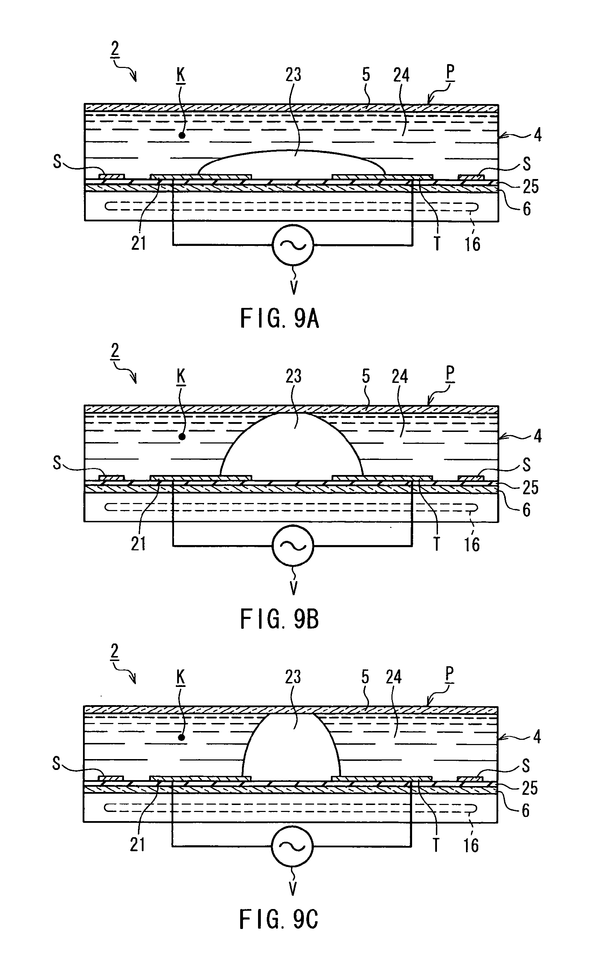

Now, specific exemplary operation in the pixel region P of the display element 2 according to the present embodiment will be described with reference to FIG. 9.

FIGS. 9A to 9C are cross-sectional views for explaining exemplary operation of the display element shown in FIG. 7 and show the configuration of the principal components of the display element shown in FIG. 7 in the voltage-off state, the intermediate voltage application state, and the voltage-on state, respectively.

As shown in FIG. 9A, in the display element 2 according to the present embodiment, the soft material 23 does not expand or contract from the state as initially enclosed in the display space K and is retained in the initial shape during the voltage-off state, that is, when a voltage is not applied to the pixel electrode 21 from the power source V provided within the source driver 18 and substantially functioning as the voltage application portion. Consequently, in the display element 2 according to the present embodiment, the soft material 23 is covered with the black ink 24 when viewed from the display surface side (upper substrate 5 side) as shown in FIG. 9A, so that the black ink 24 blocks illumination light from the cold cathode fluorescent tubes 16 and black is displayed on the display surface.

Further, when the power source V applies to the pixel electrode 21 an intermediate (gradation) voltage responsive to the gradation of a video signal, an electric field is generated between the pixel electrode 21 and the common electrode T in response to the applied voltage. Consequently, as shown in FIG. 9B, the soft material 23 expands and/or contracts in the thickness direction in response to the generated electric field so as to come into contact with the upper substrate 5, and the tip portion of the soft material 23 comes into contact with the pixel electrode 21 on the upper substrate 5. As a result, in the display element 2 according to the present embodiment, illumination light from the cold cathode fluorescent tubes 16 passes through the lower substrate 6, the insulating film 25, the pixel electrode 21, the common electrode T, the soft material 23, and the upper electrode 5 and is output externally. At this time, in the display element 2 according to the present embodiment, the contact area between the soft material 23 and the upper substrate 5 is smaller than the contact area between the two at the time of applying the maximum voltage (described later). Thus, an intermediate color between black and white and responsive to the applied voltage, in other words, gray is displayed on the display surface.

Further, when the power source V applies to the pixel electrode 21 the maximum voltage responsive to the gradation of a video signal as shown in FIG. 9C, an electric field is generated between the pixel electrode 21 and the common electrode T in response to the maximum applied voltage. Consequently, as shown in FIG. 9C, the soft material 23 expands and/or contracts in the greatest possible manner in the thickness direction in response to the generated electric field so as to come into contact with the upper substrate 5, and the tip portion of the soft material 23 comes into contact with the pixel electrode 21 on the upper substrate 5 in the greatest possible manner. As a result, in the display element 2 according to the present embodiment, illumination light from the cold cathode fluorescent tubes 16 passes through the lower substrate 6, the insulating film 25, the pixel electrode 21, the common electrode T, the soft material 23, and the upper electrode 5 and is output externally. At this time, in the display element 2 according to the present embodiment, the contact area between the soft material 23 and the upper substrate 5 becomes the largest, so that pure white is displayed on the display surface. The maximum voltage applied to the pixel electrode 21 from the power source V is specifically an alternating voltage of few V to a few tens of V.

Although the description given above is directed to the case where an alternating voltage is applied to the pixel electrode 21 from the power supply V provided in the source driver 18, the display element 2 according to the present embodiment is not limited to such a configuration as long as an electric field can be generated between the pixel electrode (first electrode) 21 and the common electrode (second electrode) T. Thus, the display element 2 may be configured such that a voltage is applied to both the pixel electrode 21 and the common electrode T as needed.

As a result of the configuration described above, the present embodiment can produce the same effects as those of Embodiment 1.

Further, in the display element 2 according to the present embodiment, the plurality of pixel regions P are provided on the display surface side in a matrix, and in each of the plurality of pixel regions P, the pixel electrode (the first electrode) 21 and the common electrode (second electrode) T are provided on the lower substrate 6. For this reason, in the display element 2 according to the present embodiment, the soft material 23 expands and/or contracts in response to the horizontal electric field in each of the plurality of pixel regions P, so that a display color on the display surface can be changed for each pixel region P. Furthermore, in contrast to the display element 2 according to Embodiment 1, the illumination light is output externally without passing through both the pixel electrode (first electrode) 21 and the common electrode (second electrode) T in the display element 2 according to the present embodiment. Thus, the display element 2 with higher brightness can be configured with ease in the present embodiment in contrast to the display element 2 according to Embodiment 1.

### [Embodiment 3]

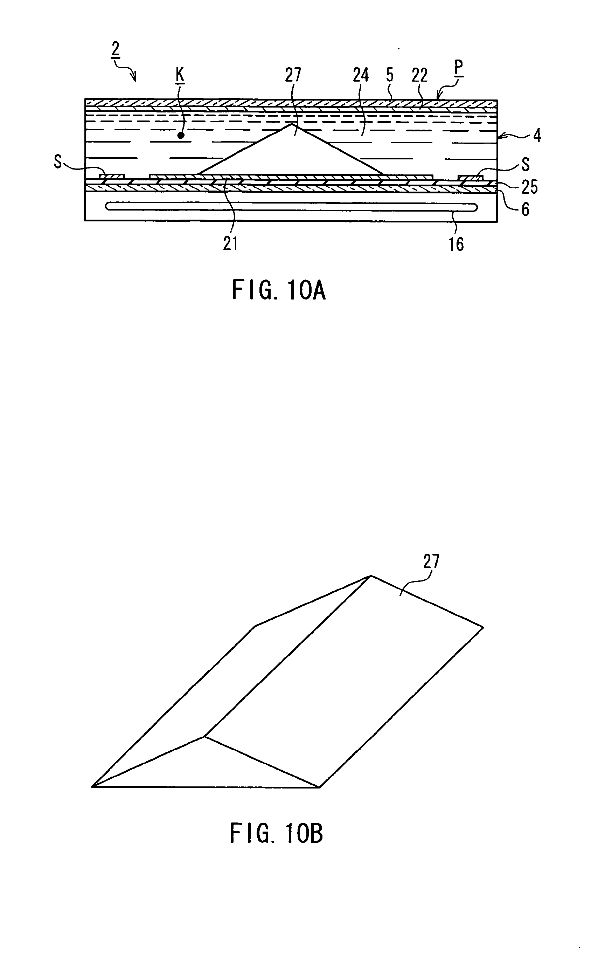

FIG. 10A is a cross-sectional view showing a configuration of principal components of a display element according to Embodiment 3 of the present invention, and FIG. 10B is a perspective view showing the soft material shown in FIG. 10B. In the drawings, the major difference between the present embodiment and Embodiment 1 is that when an electric field is not generated the soft material has a triangular prism shape whose top is protruded toward the upper substrate 5. Note that the same components as in Embodiment 1 are denoted by the same reference numerals and the detailed description thereof will not be repeated.

As shown in FIGS. 10A and 10B, in the display element 2 according to the present embodiment, the black ink 24 and a soft material 27 are contained in the soft material layer 4. When an electric field is not generated between the pixel electrode (first electrode) 21 and the counter electrode (second electrode) 22, the soft material 27 has a triangular prism shape whose top is protruded toward the upper substrate (first transparent substrate) 5, and is enclosed in the display space K so as to be in contact with the pixel electrode 21 on the lower substrate 6.

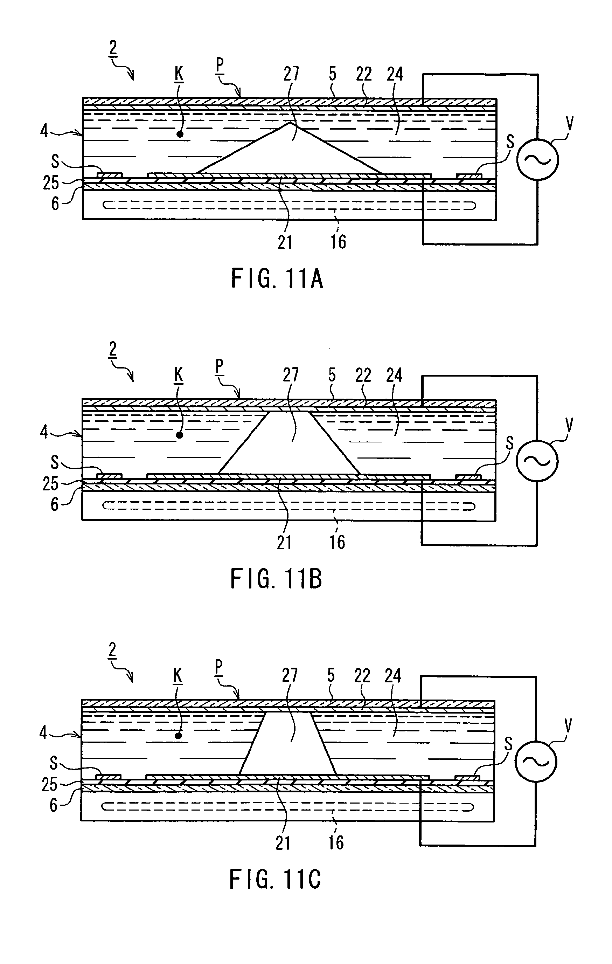

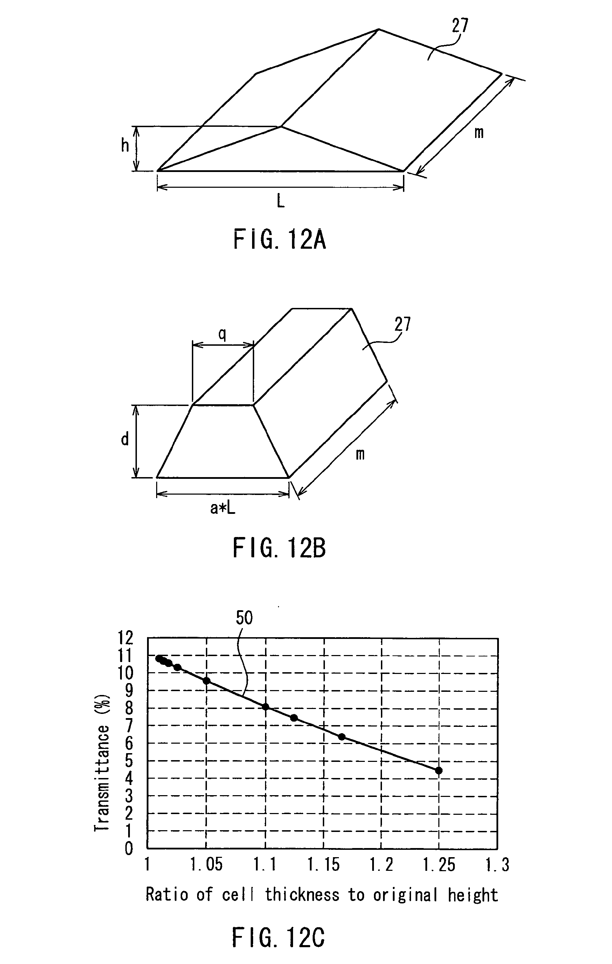

Now, specific exemplary operation in the pixel region P of the display element 2 according to the present embodiment will be described with reference to FIGS. 11 and 12.

FIGS. 11A to 11C are cross-sectional views for explaining exemplary operation of the display element shown in FIG. 10, and show the configuration of the principal components of the display element shown in FIG. 10 in the voltage-off state, the intermediate voltage application state, and the voltage-on state, respectively. FIGS. 12A and 12B are perspective views of the soft material shown in FIG. 10 in the voltage-off state and the voltage-on state, respectively. FIG. 12C is a graph showing changes in transmittance of the soft material shown in FIG. 10.

As shown in FIG. 11A, in the display element 2 according to the present embodiment, the soft material 27 does not expand and/or contract from the state as initially enclosed in the display space K and is retained in the initial shape during the voltage-off state, that is, when a voltage is not applied to the pixel electrode 21 from the power source V provided within the source driver 18 and substantially functioning as the voltage application portion. Consequently, in the display element 2 according to the present embodiment, the soft material 27 is covered with the black ink 24 when viewed from the display surface side (upper substrate 5 side) as shown in FIG. 11A, so that the black ink 24 blocks illumination light from the cold cathode fluorescent tubes 16 and black is displayed on the display surface.

Further, when the power source V applies to the pixel electrode 21 an intermediate (gradation) voltage responsive to the gradation of a video signal, an electric field is generated between the pixel electrode 21 and the counter electrode 22 in response to the applied voltage. Consequently, as shown in FIG. 11B, the soft material 27 expands and/or contracts in the thickness direction in response to the generated electric field so as to come into contact with the upper substrate 5, and the tip portion (top) of the soft material 27 comes into contact with the pixel electrode 21 on the upper substrate 5. As a result, in the display element 2 according to the present embodiment, illumination light from the cold cathode fluorescent tubes 16 passes through the lower substrate 6, the insulating film 25, the pixel electrode 21, the soft material 27, the counter electrode 22, and the upper electrode 5 in order and is output externally At this time, in the display element 2 according to the present embodiment, the contact area between the soft material 27 and the upper substrate 5 is smaller than the contact area between the two at the time of applying the maximum voltage (described later). Thus, an intermediate color between black and white and responsive to the applied voltage, in other words, gray is displayed on the display surface.

Further, when the power source V applies to the pixel electrode 21 the maximum voltage responsive to the gradation of a video signal as shown in FIG. 11C, an electric field is generated between the pixel electrode 21 and the counter electrode 22 in response to the maximum applied voltage. Consequently, as shown in FIG. 11C, the soft material 27 expands and/or contracts in the greatest possible manner in the thickness direction in response to the generated electric field so as to come into contact with the upper substrate 5, and the tip portion of the soft material 27 comes into contact with the pixel electrode 21 on the upper substrate 5 in the greatest possible manner. As a result, in the display element 2 according to the present embodiment, illumination light from the cold cathode fluorescent tubes 16 passes through the lower substrate 6, the insulating film 25, the pixel electrode 21, the soft material 27, the counter electrode 22, and the upper electrode 5 in order and is output externally. At this time, in the display element 2 according to the present embodiment, the contact area between the soft material 27 and the upper substrate 5 becomes the largest, so that pure white is displayed on the display surface. The maximum voltage applied to the pixel electrode 21 from the power source V is specifically an alternating voltage of few V to a few tens of V.

Further, the soft material 27 has a triangular prism shape in the voltage-off state as shown in FIG. 12A and its shape changes into a trapezoid prism shape in the voltage-on state as shown in FIG. 12B. Further, when the voltage state is switched to the voltage-on state from the voltage-off state, the soft material 27 deforms such that its top expands toward the upper substrate 5. Specifically, the dimension of the soft material 27 in the horizontal direction of FIG. 11A decreases from "L" shown in FIG. 12A and becomes "a * L" shown in FIG. 12B. Further, the dimension of the soft material 27 in the vertical direction of FIG. 11A increases from "h" shown in FIG. 12A and becomes "d" shown in FIG. 12B. The dimension of the soft material 27 in the direction perpendicular to the sheet of FIG. 11A does not change as indicated with "m" in FIGS.12A and 12B. Further, as shown in FIG. 12B, the dimension of the top close to the upper substrate 5 in the horizontal direction of FIG. 11A becomes "q" as shown in FIG. 12B during the voltage-on state. In other words, the top of the soft material 27 comes into contact with the counter electrode 22 on the upper substrate 5 and the contact area between the two at that time can be expressed by "q x m".

Further, as a graph 50 in FIG. 12C indicates, the transmittance of the soft material 27 can be changed with easy by changing the ratio of the dimension "d" as the cell thickness to the dimension "h" as the original height. That is, the transmittance of the illumination light can be changed with ease with the soft material 27, whereby high-definition gradation can be displayed.

As a result of the configuration described above, the present embodiment can produce the same effects as those of Embodiment 1.

In the display element 2 according to the present embodiment, when an electric field is not generated the soft material 27 has a triangular prism shape whose top is protruded toward the upper substrate 5. For this reason, in the display element 2 according to the present embodiment, an increase in the contact area between the soft material 27 and the upper substrate 5 can be changed with ease. Thus, as the graph 50 indicates, high-definition gradation can be displayed with ease by changing the transmittance with ease.

Although the description given above is directed to the case where when an electric field is not generated the soft material has a triangular prism shape whose top is protruded toward the upper substrate 5, the soft material of the present embodiment is not limited to this as long as the soft material has a polygonal prism shape such as a pentagonal prism shape having three top portions protruded toward the upper substrate 5, for example.

Further, in addition to the case described above, the soft material 27 may be expanded and/or contracted by generating a horizontal electric field as described in Embodiment 2.

All of the embodiments described above are shown merely for an illustrative purpose and are not limiting. The technical scope of the present invention is defined by the claims, and all the changes within a range equivalent to the configuration recited in the claims also are included in the technical scope of the present invention.

For example, the descriptions given above have been directed to the case where the present invention is applied to a display device provided with a display portion. However, the application of the present invention is not limited thereto and the present invention can be applied to any electrical devices provided with display portions that display information including characters and images. For example, the present invention is suitable for a variety of electrical devices provided with display portions including a personal digital assistant such as an electronic organizer, a display device for a personal computer or television, and an electronic paper.

The descriptions given above have been directed to the case of configuring a transmission type display element provided with an illuminating device. However, the application of the present invention is not limited thereto and the present invention can also be applied to a reflection type display element including a light reflection portion such as a diffuse reflection plate as well as a semi-transmission type display element using the light reflection portion and an illuminating device in combination.

However, as in each of the embodiments described above, it is preferable to use an illuminating device because a transmission type display element using illumination light can be configured, whereby a display element with high brightness can be configured with ease.

The descriptions given above have been directed to the case of using a liquid crystal elastomer as the soft material. However, the soft material used in the display element of the present invention is not limited to a liquid crystal elastomer as long as it is enclosed in the display space formed between the first transparent substrate and the second transparent substrate in an expandable and/or contractable manner and expands and/or contracts when an electric field is generated between the first electrode and the second electrode such that the soft material comes into contact with or moves away from at least one of the first transparent substrate and the second transparent substrate in response to the generated electric field, and is expanded and/or contracted to change each contact area between the soft material and the first and second transparent substrates (i.e. to change contact area between the soft material and the first transparent substrate and to change contact area between the soft material and the second transparent substrate) to change a display color on the display surface.

Specifically, a polymeric gel and an electrostriction polymer (dielectric elastomer) can be used as the soft material.

The descriptions given above have been directed to the case where a colorless transparent liquid crystal elastomer (the soft material) and black ink (the insulating fluid) are used to change a display color to either black, white or an intermediate color between black and white. However, the display element of the present invention is not limited to such a case. Specifically, with the use of a soft material that is colored black, white can be displayed when each contact area between the soft material and the first and second transparent substrates is the smallest and black can be displayed when each contact area between the soft material and the first and second transparent substrates is the largest. For example, color filter layers of red (R), green (G) and blue (B) may be provided to three adjacent pixel regions on the first transparent substrate side, respectively, to configure a display element capable of carrying out displaying in full color due to these pixel regions.

The descriptions given above have been directed to the case where nonpolar oil is used as the black ink. However, the present invention is not limited to such a case as long as an insulating fluid unblendable with the soft material is used. For example, air may be used in place of the oil. Further, silicone oil, aliphatic hydrocarbons and the like can be used as the oil.

However, as in each of the embodiments described above, it is preferable to use nonpolar oil incompatible with the soft material than air and a conductive fluid because it is easier for the soft material to expand and/or contract in the nonpolar oil, so that the rate at which the soft material expands and/or contracts can be increased with ease and the rate at which a display color on the display surface is changed can also be increased with ease.

The descriptions given above have been directed to the case where the soft material is enclosed in the display space so as to be in contact with not the upper substrate (first transparent substrate) but the lower substrate (second transparent substrate). However, the present invention is not limited to such a case. For example, the soft material may be enclosed in the display space so as to be in contact with the upper substrate. In this way, it is preferable to enclose the soft material in the display space so as to be in contact with one of the first transparent substrate and the second transparent substrate because it is easier for the soft material to come into contact with the other transparent substrate when an electric field is generated between the first electrode and the second electrode. Thus, a display color on the display surface can be changed with ease.

Further, the descriptions given in Embodiments 1 and 3 have been directed to the case where a liquid crystal elastomer having positive dielectric anisotropy (positive-type liquid crystal elastomer) is used to configure the normally black display elements. Further, the description given in Embodiment 2 has been directed to the case where a liquid crystal elastomer having negative dielectric anisotropy (negative-type liquid crystal elastomer) is used to configure the normally black display element. However, the display element of the present invention is not limited to such cases. Thus, with the use of a positive-type liquid crystal elastomer or a negative-type liquid crystal elastomer, a normally white display element can also be configured.

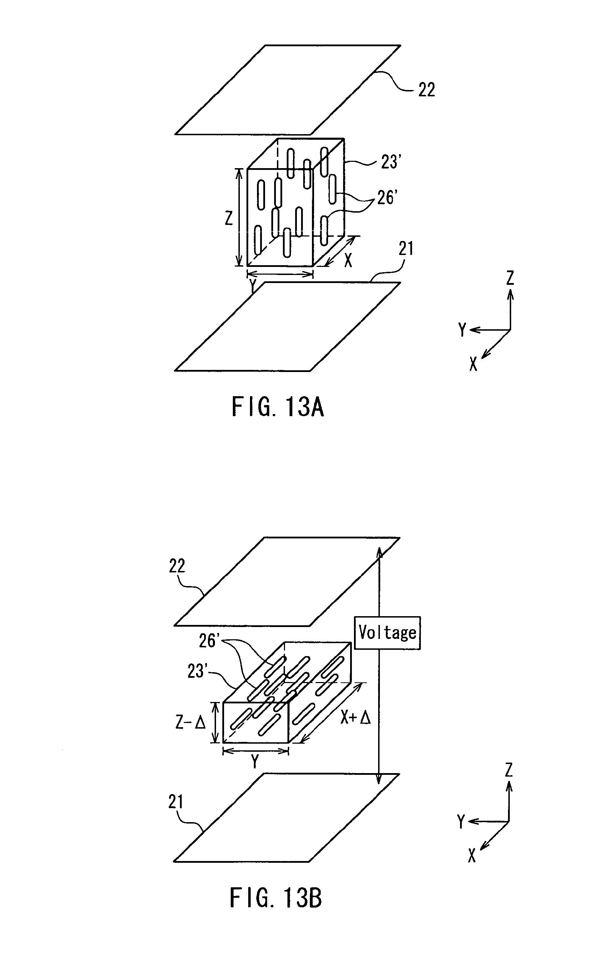

Specifically, as shown in FIGS. 13A and 13B as an example, the pixel electrode (first electrode) 21 and the counter electrode (second electrode) 22 are disposed to oppose each other so as to allow generation of a vertical electric field (an electric field parallel to the Z direction in the drawings). Further, a negative-type liquid crystal elastomer 26' is used as a soft material 23' and the negative-type liquid crystal elastomer 26' is oriented vertically by, for example, rubbing or photo-orientation through, for example, a vertically orientated film (not shown) so that the negative-type liquid crystal elastomer 26' becomes parallel to the Z direction in the voltage-off state of FIG. 13A. Furthermore, the soft material 23' (the negative-type liquid crystal elastomer 26') is enclosed in the display space K so as to be in contact with both the upper substrate (first transparent substrate) 5 and the lower substrate (second transparent substrate) 6 in the voltage-off state. And in the voltage-on state of FIG. 13B, the soft material 23' (negative-type liquid crystal elastomer 23') expands and/or contracts to move away from the first transparent substrate and the second transparent substrate. That is, as shown in FIG. 13B, the soft material 23' expands and/or contracts such that its dimension in the X direction increases by Δ and its dimension in the Z direction decreases by Δ relative to the dimensions of the soft material 23' in the voltage-off state and each contact area between the soft material 23' and the first and second transparent substrates becomes 0. As a result, a normally white display element is configured, and the display element displays white in the voltage-on state and displays black in the voltage-off state.

As in the case of the display element according to Embodiment 2, in a display element where a horizontal electric field is generated to cause a soft material to expand and/or contract, a positive-type liquid crystal elastomer is used as the soft material and the positive-type liquid crystal elastomer is oriented vertically by, for example, rubbing or photo-orientation through, for example, a vertically oriented film (not shown) so that the positive-type liquid crystal elastomer becomes perpendicular to the first transparent substrate and the second transparent substrate in the voltage-off state. Furthermore, the soft material (the positive-type liquid crystal elastomer) is enclosed in the display space K so as to be in contact with both the first transparent substrate and the second transparent substrate in the voltage-off state. The soft material (the positive-type liquid crystal elastomer) expands and/or contracts to move away from the first transparent substrate and the second transparent substrate in the voltage-on state. As a result, a normally white display element is configured, and the display element displays white in the voltage-on state and displays black in the voltage-off state.

The descriptions given above have been directed to the case where the liquid crystal elastomer is oriented horizontally or vertically with the use of a horizontally or vertically oriented film, the liquid crystal elastomer of the present invention is not limited to such a case. For example, when the photopolymerized liquid crystal monomers and the crosslinker contained in the liquid crystal elastomer are drawn in a predetermined orientation direction (to be horizontally or vertically oriented) when polymerizing them under ultraviolet irradiation, the liquid crystal elastomer can be oriented horizontally or vertically. Further, when the liquid crystal elastomer is oriented in this way, there is no need to provide a horizontally or vertically orientated film.

The descriptions given above in Embodiments 1 and 2 have been directed to the case of using the soft material 23 having a semi-elliptic cylinder shape when an electric field is not generated between the pixel electrode (first electrode) 21 and the counter electrode (second electrode) 22 as shown in FIG. 3. Further, the description given above in Embodiment 3 has been directed to the case of using the soft material 27 having a triangular prism shape whose top is protruded toward the upper substrate (first transparent substrate) 5 when an electric field is not generated between the pixel electrode (first electrode) 21 and the counter electrode (second electrode) 22. However, the soft material of the present invention is not limited to these.

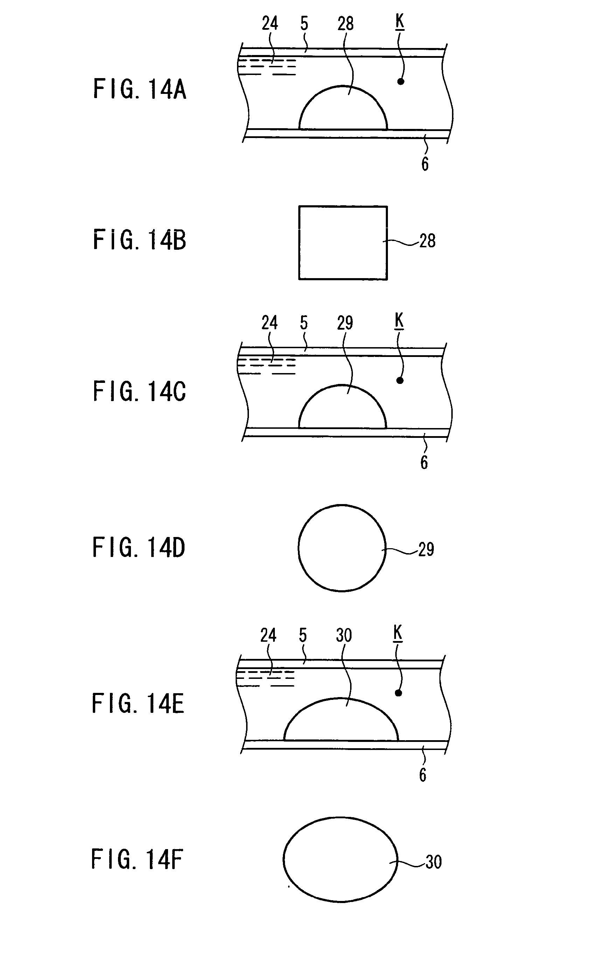

Specifically, as shown in FIGS. 14A and 14B, it is possible to use a soft material 28 having a semi-cylindrical shape when an electric field is not generated between the first electrode and the second electrode. Further, as shown in FIGS. 14C and 14D, it is possible to use a soft material 29 having a hemispherical shape when an electric field is not generated between the first electrode and the second electrode. Further, as shown in FIGS. 14E and 14F, it is possible to use a soft material 30 having a semi-oval sphere shape when an electric field is not generated between the first electrode and the second electrode.

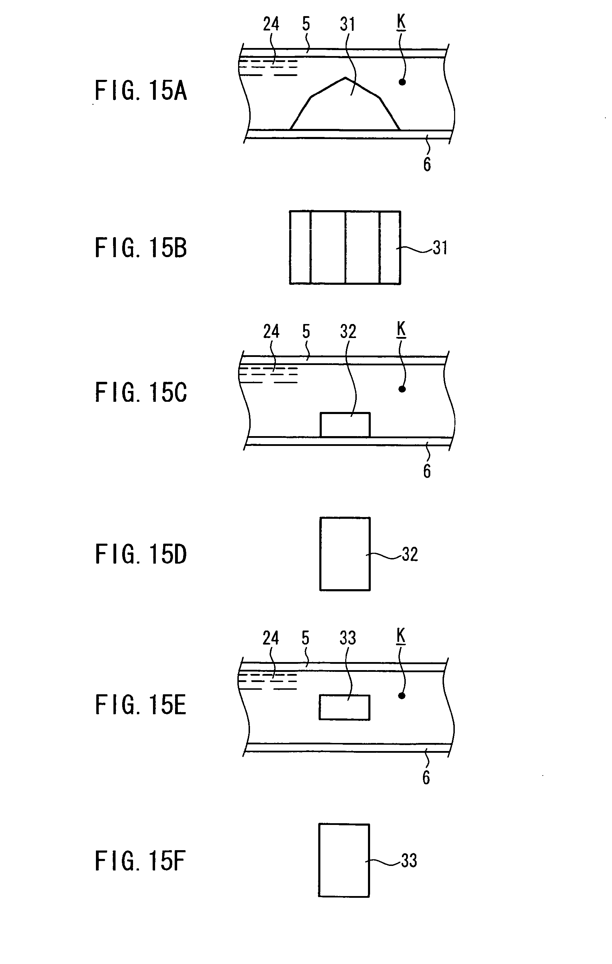

Further, as shown in FIGS 15A and 15B, it is possible to use a soft material 31 having a pentagonal prism shape when an electric field is not generated between the first electrode and the second electrode. Further, as shown in FIGS. 15C and 15D, it is possible to use a soft material 32 having a rectangular shape when an electric field is not generated between the first electrode and the second electrode. Further, as shown in FIGS. 15E and 15F, it is possible to use a soft material 33 that has a rectangular shape and is away from both the upper substrate (first substrate) 5 and the lower substrate (second substrate) 6 and floats in the black ink (insulating fluid) 24 when an electric field is not generated between the first electrode and the second electrode.

### Industrial Applicability

The present invention is useful for a display element with excellent display quality capable of improving the efficiency of light used in displaying and for a high-performance electrical device with reduced power consumption.

### Description of Reference Numerals

- 1: display device (electrical device)
- 2: display element (display unit)
- 3: illuminating device
- 5: upper substrate (first transparent substrate)
- 6: lower substrate (second transparent substrate)
- 17: panel control portion (control portion)
- 18: source driver (voltage application portion, data line driving circuit)
- 20: thin film transistor (switching element)
- 21: pixel electrode (first electrode)
- 22: counter electrode (second electrode)
- 22, 23', 27, 28, 29, 30, 31, 32, 33: soft material
- 24: black ink (insulating fluid)
- 26, 26': liquid crystal elastomer
- T: common electrode (second electrode)
- V: power supply (voltage application unit)
- S1 to SM: source line (data line)
- G1 to GN: gate line (scanning line)
- K: display space
- P: pixel region

## Claims

1. A display element comprising:
a first transparent substrate provided on a display surface side;
a second transparent substrate provided on a non-display surface side of the first transparent substrate such that a predetermined display space is formed between the first transparent substrate and the second transparent substrate;
a first electrode and a second electrode provided on at least one of the first transparent substrate and the second transparent substrate;
a voltage application portion for applying a voltage to at least one of the first electrode and the second electrode such that an electric field is generated between the first electrode and the second electrode;
a soft material enclosed in the display space in an expandable and/or contractable manner, wherein the soft material expands and/or contracts when an electric field is generated between the first electrode and the second electrode such that the soft material comes into contact with or moves away from at least one of the first transparent substrate and the second transparent substrate in response to the generated electric field; and
a control portion for receiving an externally input instruction signal and driving the voltage application portion based on the input instruction signal,
wherein the control portion causes the soft material to expand and/or contract to change each contact area between the soft material and the first and second transparent substrates to change a display color on the display surface.

2. The display element according to claim 1, wherein a plurality of pixel regions are provided on the display surface side in a matrix, and
in each of the plurality of pixel regions, the first electrode is provided on one of the first transparent substrate and the second transparent substrate and the second electrode is provided on the other of the first transparent substrate and the second transparent substrate.

3. The display element according to claim 1, wherein a plurality of pixel regions are provided on the display surface side in a matrix, and
in each of the plurality of pixel regions, the first electrode and the second electrode are provided on one of the first transparent substrate and the second transparent substrate.

4. The display element according to claim 2 or 3, wherein a plurality of data lines and a plurality of scanning lines are provided on one of the first transparent substrate and the second transparent substrate in a matrix,
each of the plurality of pixel regions is located at each of intersections of the data lines and the scanning lines and a switching element connected to the first electrode is provided for each pixel region in the vicinity of the intersection of each data line and each scanning line, and
a data line driving circuit that outputs voltage signals to the data lines in response to instruction signals from the control portion is used as the voltage application portion.

5. The display element according to any one of claims 1 to 4, wherein the soft material is enclosed in the display space so as to be in contact with one of the first transparent substrate and the second transparent substrate.

6. The display element according to any one of claims 1 to 5, wherein when an electric field is not generated between the first electrode and the second electrode the soft material has a polygonal prism shape whose top is protruded toward at least one of the first transparent substrate and the second transparent substrate.

7. The display element according to any one of claims 1 to 6, wherein an insulating fluid unblendable with the soft material is enclosed in the display space movably in the display space.

8. The display element according to any one of claims 1 to 7, wherein a liquid crystal elastomer having positive dielectric anisotropy is used as the soft material.

9. The display element according to any one of claims 1 to 7, wherein a liquid crystal elastomer having negative dielectric anisotropy is used as the soft material.

10. An electrical device comprising a display portion for displaying information containing a character and an image,
wherein the display element according to any one of claims 1 to 9 is used as the display portion.
